# EUROPÄISCHE PATENTSCHRIFT

(11) **EP 0 981 436 B1**
(45) Veröffentlichungstag und Bekanntmachung des Hinweises auf die Patenterteilung: **25.09.2002**
(21) Anmeldenummer: 98924274.8
(22) Anmeldetag: 04.05.1998
(51) Int. Cl.: B32B 15/08, B32B 27/40, B32B 31/00, F23J 13/02, B65D 90/04

(54) **FLÄCHENFÖRMIGER, KALT UMFORMBARER MATERIALVERBUND**
FLAT, COLD DEFORMABLE COMPOSITE MATERIAL
MATERIAU COMPOSITE PLAT DEFORMABLE A FROID

(30) Priorität: 06.05.1997 DE 19719004; 06.05.1997 DE 19719005
(43) Veröffentlichungstag der Anmeldung: 01.03.2000
(73) Patentinhaber: Krupp VDM GmbH, 58791 Werdohl (DE)
(72) Erfinder: ROMMERSKIRCHEN, Iris, D-58769 Nachrodt (DE); KIRCHHEINER, Rolf, D-58644 Iserlohn (DE); BORN, Erwin, D-28719 Bremen (DE); HENNEMANN, Otto-Dietrich, D-27711 Osterholz-Scharmbeck (DE)
(86) Internationale Anmeldenummer: EP9802623
(87) Internationale Veröffentlichungsnummer: WO98050227

(56) Entgegenhaltungen:
- EP-A- 0 664 210
- DE-A- 3 904 170
- US-A- 3 578 552

## Beschreibung

Erfindungsgegenstand ist ein flächenförmiger, kalt umformbarer Materialverbund, insbesondere zum Einsatz als Auskleidung in der Umwelt- und der chemischen Prozeßtechnik gem. gattungsbildendem Teil des ersten und desser Herstellungsverfahren gemäß gattungs bilden dem Teil des sechsten Patentanspruches.

Bekannt sind beispielsweise großflächige Materialverbunde aus korrosionsbeständigen Legierungen und C-Stählen, die durch Plattieren unter Reibschweißbedingungen hergestellt werden. Dieses Verfahren ist jedoch nur für Blechstärken von über 1 mm des hochkorrosionsbeständigen Werkstoffes anwendbar und bedingt Spannungseinflüsse im Schichtverbund. Hinzu kommt bei diesen Materialverbunden ein erhöhter Schweiß- und Verarbeitungsaufwand.

Der EP-A 470 928 ist ein Verfahren zum elastische Verkleben zweier Substratflächen mit wäßrigen Klebstoffdispersionen zu entnehmen, wovon wenigstens eine porös ausgebildet ist. Eine kautschukhaltige erste Dispersion mit einem Acrylsäureestercopolymer und eine kolloidale zweite Dispersion eines Chloroprenpolymerisates werden nach vorheriger oder mit gleichzeitiger Durchmischung auf wenigstens eine der Substratflächen aufgetragen. Die zu verklebenden Substratflächen werden mit den nassen Klebstoffdispersionen aufeinandergelegt und angedrückt.

Der DE-A 28 47 988 ist ein Verfahren zum Verkleben von Blechpaketen im Elektromaschinen- und Transformatorenbau zu entnehmen, bei dem das Blechpaket mit Epoxidharz übergossen und bis zum Aushärten des Harzes gepreßt wird. Zunächst wird das Blechpaket auf 120 bis 130 °C erwärmt und dann mit einem kalt aushärtenden Epoxidharz von Raumtemperatur übergossen.

Durch die DE-C 31 45 949 ist ein Verfahren zum großflächigen Verkleben zweier dünnwandiger Bauteile bekannt geworden, wobei diese zunächst mit im Abstand voneinander angeordneter Klebmasse versehen, sodann zusammengefügt und schließlich durch eine an ihren Randbereichen vorgesehene unlösbare Verbindung derart zueinander festgelegt werden, daß beim anschließenden Aushärten der Klebemasse die dünnwandigen Bauteile auf Abstand gehalten werden. Die Klebemasse wird hierbei in Form von Klebepunkten aufgetragen.

Der DE-A 39 04 170 ist ein Verfahren zum Schutz von Rauchgasentschwefelungsanlagen vor Korrosion zu entnehmen, bei welchem eine diffusionsdichte Schicht aus Metall mit einer Schicht aus einem Elastomer zusammengefügt wird, wobei das entstehende Verbundsystem durch Aufkleben auf die zu schützenden Bauteile einer Rauchgasentschwefelungsanlage als Korrosionsschutz eingesetzt wird. Die so erzeugte korrosionshemmende Schicht soll bei Temperaturen zwischen 65 und 72 °C einsetzbar sein. Eine Verschweißung bzw. Kaltumformung der durch dieses Verfahren erzeugten Bauteile ist nicht möglich.

Der DE-A 22 49 509 ist ein kaltverformbarer Verbundwerkstoff zur Herstellung von schalldämmenden Bauelementen zu entnehmen, bestehend aus zwei Metallstreifen, die durch einen Elastormerstreifen verbunden sind, der aus einem Butylkautschuk mit geringem ungesättigtem Anteil in einer Schichtstärke von 0,4 - 0,8 mm gebildet ist. Der Verbundwerkstoff kommt bevorzugt zur Anwendung in Automobilkarosserien, Schiffen, Behältern oder Außentüren von Gebäuden und ist durch Ziehen, insbesondere Tiefziehen herstellbar. Als Zwischenschicht kommt somit ein schwach vernetzter, lösemittelhaltiger Butylkautschuk als viskose Masse zum Einsatz.

Abgesehen von den genannten metallischen Lösungen zum Korrosionsschutz in Kraftwerken und Anlagen der chemischen Prozeßindustrie werden auch preiswerte Korrosionsschutzsysteme (Gummierungen, organische Beschichtungen auf C-Stahl) eingesetzt. Hier stehen den geringen Investitionskosten beim Anlagenbau jedoch enorme Kosten in Form von Stillstandszeiten und Produktionsausfällen aufgrund der geringen Lebensdauer der Gummierungen gegenüber.

Durch die EP-A 664 210 ist ein kalt umformbarer Verbundwerkstoff bekannt geworden, der ein Trägerelement und ein Auflageelement sowie einen dazwischen angeordneten nicht polymerisierten polymerischen Kleber beinhaltet. Dieser Materialverbund wird zur Endform kalt verformt, so daß die Vernetzung des Klebstoffes im Verlauf der Verformung vorgenommen wird.

Schließlich ist der US-A 3,758,552 eine kalt umformbare Sandwichstruktur zu entnehmen, die folgenden Aufbau aufweist:
- eine Kernschicht, bestehend aus einem nicht ausgehärtetem Harz,
- eine insbesondere aus Aluminium bestehende Folie,
- eine weitere Harzschicht.

Die Sandwichstruktur wird in nicht vernetztem Zustand des bzw. der Harze(s) kalt verformt, wobei die Metallfolie zwischen den beiden Harzschichten vorgesehen ist. Im Anschluß an die Kaltverformung erfolgt zur Vernetzung der Harze eine Wärmebehandlung.

Aufgabe des Erfindungsgegenstandes ist es, einen Materialverbund, insbesondere eine Auskleidung in Form eines Materialverbundes zu konzipieren, der die Nachteile des Standes der Technik nicht mehr beinhaltet, insbesondere eine verhältnismäßig hohe Standzeit aufweist und bei Bedarf auch für Sanierungsfälle einsetzbar sein soll.

Diese Aufgabe wird durch die im kennzeichnenden Teil des ersten bzw. sechsten Patentanspruches angegebenen Merkmale gelöst.

Vorteilhafte Weiterbildungen des Verfahrens zur Herstellung des Materialverbundes sind den zugehörigen Unteransprüchen zu entnehmen.

Zur Herstellung dieser Materialverbunde, insbesondere der Auskleidungen, wird zunächst die Oberfläche der Fügeteile in an sich bekannter Weise entfettet. Besonders vorteilhaft ist dabei die Verwendung eines Haftreinigers auf der Basis von in Alkanolen gelösten Alkyltitanaten. Anschließend wird zumindest auf eine der zu fügenden Oberflächenbereiche ein fließfähiger Klebstoff in geeigneter Weise aufgebracht, woraufhin dann die Fügeteile zusammengebracht werden. Das Aufbringen des Klebstoffes und/oder der Dichtmasse kann in an sich bekannter Weise z.B. durch Aufsprühen erfolgen. Für das Verkleben der Fügeteile ist Kontaktdruck ausreichend.

Die Vernetzungsgeschwindigkeit der zum Einsatz gelangenden Klebstoffe bzw. Dichtmassen kann bei feuchtvernetzenden Systemen,
beispielsweise in Abhängigkeit von den Umweltbedingungen, durch Befeuchten der Umgebungsluft erhöht werden, so daß u.U. schon nach 24 Stunden eine im wesentlichen abgebundene, weiterverarbeitbare Klebung vorliegt. Überraschend hat sich herausgestellt, daß zu Elastomeren feuchtvernetzende Polyurethanklebstoffe bzw. -dichtmassen für den vorgesehenen Verwendungszweck geeignet sind.

Die Festigkeit und die Umformbarkeit der erfindungsgemäßen Materialverbunde sind in weiten Grenzen von der Klebschichtdicke praktisch unabhängig. Die Klebfestigkeit (Druckfestigkeit) der Klebeverbindung genügt den thermomechanischen Beanspruchungen bei der Weiterverarbeitung.

Die Klebetechnik bietet aufgrund der isolierenden Eigenschaften des Klebers bzw. der Dichtmasse eine Verbindungsmöglichkeit für Metalle unterschiedlicher elektrochemischer Eigenschaften unter Ausschluß der galvanischen Korrosion. Aufgrund der schonenden Haftungsbildung zwischen Kleber bzw. Dichtmasse und den Fügeteiloberflächen stellt die Klebetechnik eine Verbindungsmöglichkeit für u.a. sehr dünne Fügeteile (Folien) dar. Die erfindungsgemäßen Materialverbunde, insbesondere die Auskleidungen, lassen sich mit den in der Metallverarbeitung üblichen Verfahren trennen und weiterverarbeiten.

Als Trägerelement kommt vorzugsweise ein C-Stahl-Kesselblech unterschiedlichster Materialstärke zum Einsatz. Das Auflageelement sollte vorzugsweise aus einer hochkorrosionsbeständigen Nickel-Chrom-Molybdän-Legierung bestehen.

Allgemein einsetzbar ist der Erfindungsgegenstand beispielsweise in der Nahrungsmittelindustrie, im Pipelinebau, im Schiffsbau, zur Herstellung von Verdampfern und Wärmetauschern und dergleichen.

Der durch den Kleber bzw. die Dichtmasse so gebildete Materialverbund, insbesondere die Auskleidung, ist verwerdbar gemäß den Ansprüchen 10 und 11, insbesondere in der Umwelt- und der chemischen Prozeßtechnik. Spezielle Anwendungsgebiete sind Behälter (Druckbehälter), Rauchgaskanäle, Kamine, jegliche Art von Gefahrgütertransporten, Müllverbrennungsanlagen und dergleichen.

Der Erfindungsgegenstand ist anhand eines Ausführungsbeispiels in der Zeichnung dargestellt und wird wie folgt beschrieben:

Es zeigen:
- Fig. 1: Aufbau eines aus Einzelblechen bestehenden Blechpaketes, die miteinander zu verkleben sind.
- Fig. 2: Durch Biegen kalt umgeformter Materialverbund.
- Fig. 3: Durch Schmelzschweißen miteinander verbundene, aus einzelnen Flächenelemencen bestehende Auskleidung in Form eines Materialverbundes.
- Fig. 4: Zu Fig. 3 analoger Materialverbund, wobei die Stoßkanten mit einem Abdeckblech versehen sind.
- Fig. 5: Querschnitt durch einen aus mehreren flächenförmigen Auskleidungselementen zusammengesetzten Behälter.

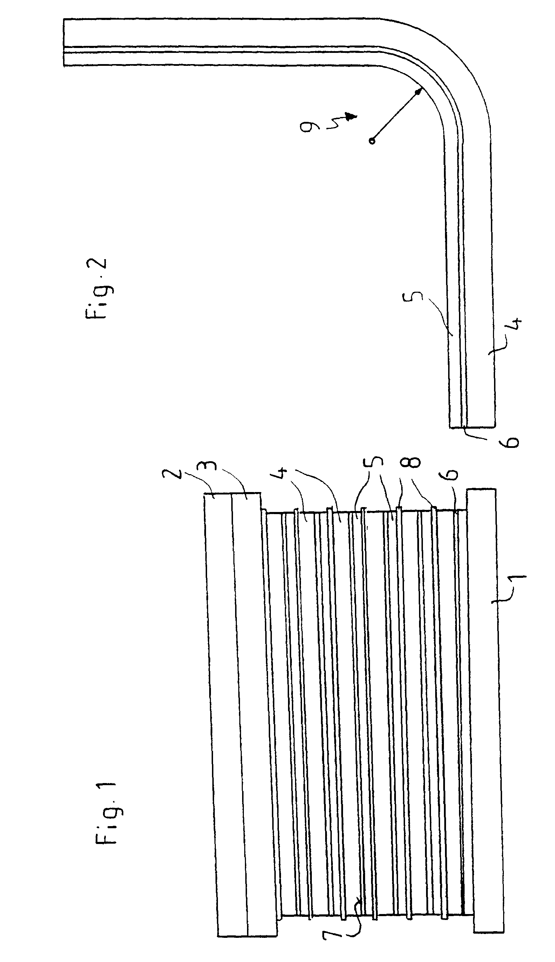

Fig. 1 zeigt eine pressenartige Einrichtung, bestehend aus einer Bodenplatte 1 sowie Abdeckplatten 2, 3, zwischen denen zu einzelnen Materialverbunden verbindbare Bauteile angeordnet sind. Jeder Materialverbund wird gebildet aus einem Trägerelement 4 sowie einem Abdeckelement 5. Zwischen dem Trägerelement 4 und dem Abdeckelement 5 erstreckt sich im wesentlichen ganzflächig eine Verbindungsschicht 6 in Form eines Klebstoffauftrages, der beispielsweise vorher durch Sprühen auf die entsprechende Oberfläche 7 des Trägerelementes 4 aufgebracht worden ist. Als Verbindungsschicht 6 soll in diesem Beispiel ein zu Elastomeren vernetzender Polyurethanklebstoff zum Einsatz gelangen. Zwischen den einzelnen Materialverbunden sind beispielsweise Aluminiumfolien 8 vorgesehen, damit eventuell hervorquellender Kleber nicht das gesamte Paket nachteilig beeinflußt und somit später umfangreichere Trennarbeiten notwendig sind.

Zur Fertigung der erfindungsgemäßen flächenförmigen, kalt umformbaren Materialverbunde werden vorzugsweise feuchtigkeitsvernetzende Klebstoffe auf Polyurethanbasis verwendet. Für die Oberflächenvorbehandlung der Fügeteile 4, 5 kann eine Alkyltitanat enthaltende alkanolische Lösung eingesetzt werden. Das Trägerelement 4 ist beispielsweise ein C-Stahl-Kesselblech, während als Auflageelement 5 eine hochkorrosionsbeständige Nickel-Chrom-Molybdän-Legierung zum Einsatz gelangt. Für den Klebstoffauftrag eignet sich sowohl die Spritztechnik wie auch das flächenmäßige Verteilen unter Verwendung von Zahnspachteln oder dergleichen. In Ausnahmefällen kann der Klebstoffauftrag auch im Raupenauftrag erfolgen. Im Anschluß an die Luftbefeuchtung wird jeweils das Auflageelement 5 auf das Trägerelement 4 bzw. umgekehrt gelegt. Durch Übereinanderstapeln mehrerer solcher Materialverbunde wird das in Fig. 1 dargestellte Blechpaket erhalten, indem die Klebeverbunde bis zur Weiterverarbeitung z.B. 16 Stunden gelagert werden. Die Abmessungen des Trägerelementes 4 sowie des Auflageelementes 5 können beispielsweise 2000 x 1000 mm betragen, wobei je nach Fertigungsmöglichkeit auch größere Abmessungen bis zu 8000 x 2500 mm möglich sind. Die Platten 2, 3 dienen lediglich zum Beschweren des Blechpaketes, wobei zur Erzeugung des bzw. der Materialverbunde(s) kein weiterer äußerer Druck notwendig ist. Die Verbindungsschicht 6 hat im vernetzten Zustand zähelastische (viskoelastische) Eigenschaften, was sie in verarbeitungstechnischer Weise von bisher zum Einsatz gelangten Klebstoffen unterscheidet.

Fig. 2 zeigt einen aus einem Trägerelement 4 sowie einem Auflageelement 5 bestehenden Materialverbund, der durch die zähelastische Eigenschaften aufweisende Verbindungsschicht 6 zusammengehalten wird. Der erfindungsgemäße Materialverbund ist bei seiner Verarbeitung durch einen Umformungsprozeß mit vorgegebenem Biegeradius beansprucht worden, wobei sich überraschenderweise gezeigt hat, daß in Folge der zähelastischen Eigenschaften der Verbindungsschicht 6 ein Ablösen des Auflageelementes 5 von dem Trägerelement 4, insbesondere in dem beanspruchten Bereich 9, nicht erkannt werden konnte. Die Klebefugendicken sind hierbei ohne nachteilige Wirkung auf die Verbundhaftung in einem breiten Bereich variabel.

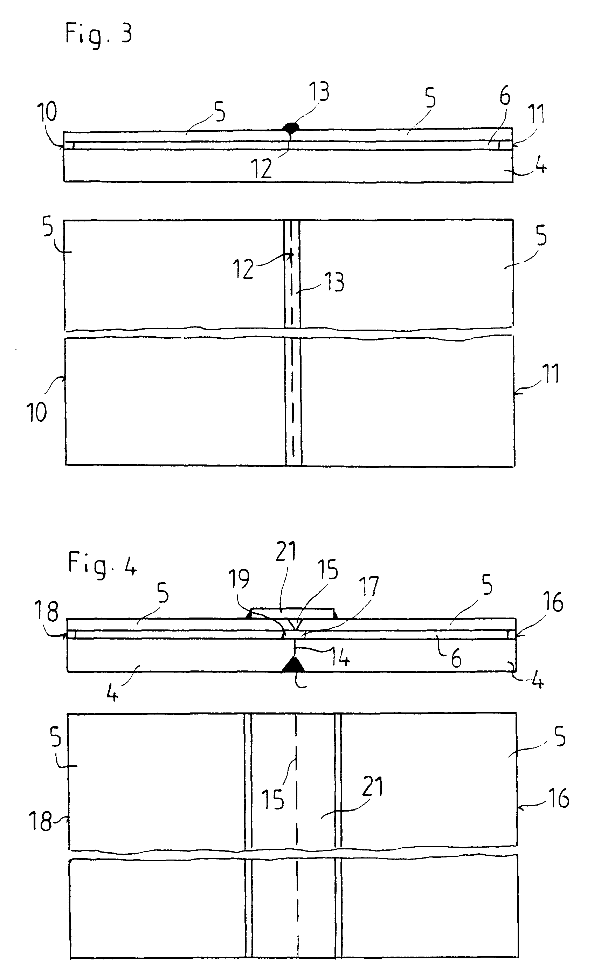

Fig. 3 zeigt eine Auskleidung in Form eines Materialverbundes, bestehend aus einem Trägerelement 4 sowie mehreren nebeneinander angeordneten Auflageelementen 5, beispielsweise einsetzbar in einem Behälter (nicht dargestellt) der chemischen Prozeßtechnik. Die im vernetzten Zustand zähelastische Eigenschaften aufweisende Verbindungsschicht, in diesem Beispiel in Form einer Dichtmasse auf Polyurethanbasis 6, ist zwar großflächig aufgetragen, erstreckt sich jedoch nicht ganz bis in die Randbereiche 10, 11 des Materialverbundes. Die Auflageelemente 5 sind mit einem geeigneten Stoß 12 versehen, der ein problemloses Schmelzschweißen ermöglichen soll. Die Schweißraupe ist hierbei mit dem Bezugszeichen 13 versehen. Ein vollständiges Durchschweißen ist bei geeigneter Stoßauswahl zu vermeiden, so daß auch keine so hohen Temperaturen in der Verbindungsschicht 6 erzeugt werden, die zu einer größeren Beschädigung im Stoßbereich führen. Dies in Ergänzung mit der zurückgesetzten Verbindungsschicht ergibt ein sehr materialschonendes Verbinden der Auflageelemente 5.

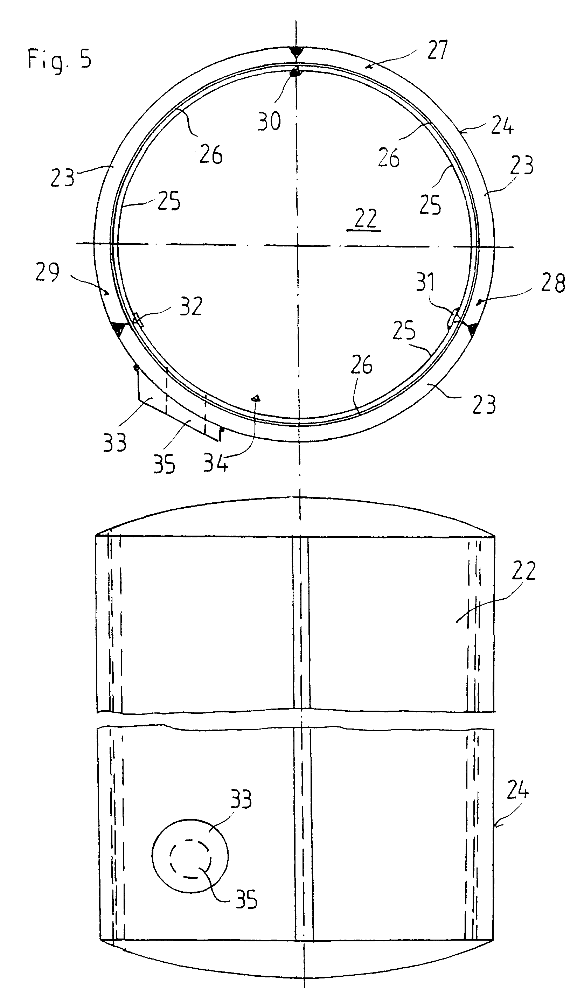

Fig. 4 zeigt eine Alternative zu Fig. 3, wobei hier mehrere Trägerelemente 4 und mehrere Auflageelemente 5 zum Einsatz gelangen, die mit geeigneten Stoßbereichen 14, 15 versehen sind. Analog zu Fig. 3 ist auch hier die Verbindungsschicht 6 nicht bis in die Randbereiche 16, 17 bzw. 18, 19 einerseits des jeweiligen Trägerelementes 4 und andererseits des jeweiligen Auflageelementes 5 eingebracht, so daß es auch bei dem sich anschließenden Schweißvorgang der Trägerelemente lediglich zu für die spätere Verwendung unbedeutenden Auflösungs- bzw. Ablösungsproblemen der Verbindungsschicht 16 von den Trägerelementen 4 bzw. den Auflageelementen 5 kommt. Die Schweißraupe ist hierbei mit dem Bezugszeichen 20 versehen und wurde im Anschluß an den Schweißvorgang an die Dicke der nun miteinander verbundenen Trägerelemente 4 angepaßt. Auf seiten der Auflageelemente 5 ist in diesem Beispiel keine Verschweißung derselben vorgesehen, vielmehr wird ein Abdeckstreifen 21 aus Blech über die Stoßstelle 15 gelegt, der dann in seinen Randbereichen mit den Auflageelementen 5 verschweißt wird. Das Material des Abdeckstreifens 21 soll in diesem Beispiel dem der Auflageelemente 5 entsprechen.

Fig. 5 zeigt einen Querschnitt durch einen Behälter 22, der aus mehreren kalt umgeformten Auskleidungselementen in Form von Kreissegmenten zusammengesetzt ist. Auch hier besteht jedes Auskleidungselement aus einem Trägerelement 23, das in diesem Ausführungsbeispiel auch gleichzeitig die Außenwand 24 des Behälters 22 bildet. Das Trägerelement 23 wirkt mit einem gleichzeitig die Innenwand 36 des Behälters 22 bildenden Auflageelement 25 zusammen, wobei zwischen beiden eine Verbindungsschicht 26 in Form eines im vernetzten Zustand zähelastische Eigenschaften aufweisenden Klebstoffes vorgesehen ist. Die Umformung des jeweiligen Auskleidungselementes wurde durch Kaltwalzen erzeugt, wobei die jeweiligen Materialverbunde im Bereich ihrer Stoßstellen 27, 28, 29 miteinander verbunden werden. Die Trägerelemente 23 sind in diesem Beispiel in jedem Fall durch Schweißen miteinander verbunden, während die Auflageelemente im Bereich 27 miteinander verschweißt sind (Schweißraupe 30). Im Bereich 28 ist ein Abdeckstreifen 31 vorgesehen, der wiederum durch Schweißen mit den Auflageelementen 25 verbunden ist. Im Bereich 29 ist ebenfalls ein Abdeckstreifen 32 vorgesehen, der jedoch nicht wie im Bereich 28 durch Schweißen, sondern durch Kleben mit den Auflageelementen 25 verbunden ist. Im Bereich der Außenwand 24 ist ein Flansch 33 vorgesehen, der einen sich bis in den Innenraum 34 des Behälters 22 erstreckenden Eingang 35 aufweist Der Behälter kann dann beispielsweise in der Umwelttechnik eingesetzt werden, wenn seine Innenwand 36 z.B. aus einer hochkorrosionsbeständigen Legierung, wie einer Nickel-Chrom-Molybdän-Legierung besteht, wobei dann auch die Abdeckstreifen 31, 32 aus einer mindestens gleiche Materialeigenschaften wie die Auflageelemente aufweisenden Legierung bestehen. Als Trägerelemente 23 können beispielsweise C-Stahl-Kesselbleche entsprechender Abmessung zum Einsatz gelangen.

## Patentansprüche

1. Flächenförmiger, kalt umformbarer Materialverbund, insbesondere zum Einsatz als Auskleidung in der Umwelt- und der chemischen Prozeßtechnik, mit mindestens einem metallischen Trägerelement (4,23) sowie mindestens einem metallischen Auflageelement (5,25), wobei das Trägerelement (4,23) beziehungsweise das Auflageelement (5,25) mit einer Verbindungsschicht (6,26) versehen ist, die im vernetzten Zustand zähelastische Eigenschaften aufweist, **dadurch gekennzeichnet, daß** das Trägerelement (4,23) aus einem Kohlenstoffstahl und das Auflageelement (5,25) aus einer korrosionsbeständigen Legierung gebildet ist.

2. Materialverbund nach Anspruch 1, **dadurch gekennzeichnet, daß** das Trägerelement (4,23) ein C-Stahl-Kesselblech ist.

3. Materialverbund nach Anspruch 1 oder 2, **dadurch gekennzeichnet, daß** das Auflageelement (5,25) aus einer hochkorrosionsbeständigen Nickel-Chrom-Molybdän-Legierung besteht.

4. Materialverbund nach einem der Ansprüche 1 bis 3, **dadurch gekennzeichnet, daß** die Verbindungsschicht (6,26) durch einen zu Elastomeren vernetzenden Polyurethanklebstoff bzw. einer zu Elastomeren vernetzenden Polyurethandichtmasse gebildet ist.

5. Materialverbund nach einem der Ansprüche 1 bis 4, **dadurch gekennzeichnet, daß** die jeweilige Oberfläche (7) in einzelnen oder mehreren Randbereichen (10,11,16,19) verbindungsschichtfrei vorgesehen ist.

6. Verfahren zur Herstellung eines flächenförmigen, kalt umformbaren Materialverbundes, insbesondere zum Einsatz als Auskleidung in der Umwelt- und der chemischen Prozeßtechnik, indem ein metallisches Trägerelement (4,23) bzw. ein metallisches Auflageelement (5,25) mechanisch oder durch Spritzen bzw. Sprühen auf die entsprechende Oberfläche mit einer Verbindungsschicht (6,26) versehen wird, die im vernetzten Zustand zähelastische Eigenschaften aufweist, **dadurch gekennzeichnet, daß** die Verbindungsschicht (6,26) auf die Oberfläche (7) des durch ein aus einem Kohlenstoffstahl bestehenden Trägerelementes (4,23) beziehungsweise des aus einer korrosionsbeständigen Legierung bestehenden Auflageelementes (5,25) aufgebracht wird.

7. Verfahren nach Anspruch 6, **dadurch gekennzeichnet, daß** die Verbindungsschicht (6,26) im wesentlichen ganzflächig auf die jeweilige Oberfläche (7) des Trägerelementes (4,23) beziehungsweise des Auflageelementes (5,25) aufgebracht wird.

8. Verfahren nach Anspruch 6 oder 7, **dadurch gekennzeichnet, daß** als Verbindungsschicht (6,26) ein Polyurethanklebstoff eingesetzt wird.

9. Verfahren nach einem der Ansprüche 6 bis 8, **dadurch gekennzeichnet, daß** als Verbindungsschicht (6,26) eine Polyurethandichtmasse eingesetzt wird.

10. Verwendung des Materialverbundes nach einem der Ansprüche 1 bis 9 für Alt- und Neuanlagen der Umwelttechnik und der chemischen Prozeßindustrie, insbesondere als Auskleidung für Kanäle und Kamine von Rauchgasentschwefelungsanlagen, von denen zumindest Teile der Auskleidung Innen- und/oder Außenwandbereiche der Anlage bilden.

11. Verwendung des Materialverbundes nach einem der Ansprüche 1 bis 9 für den Behälterbau in Alt- und Neuanlagen der chemischen Industrie, insbesondere als Auskleidung für Behälter, wobei zumindest Teile der Innenauskleidung Innen- und/oder Außenwandbereiche dieser Behälter bilden.

12. Verwendung nach Anspruch 10 oder 11, **dadurch gekennzeichnet, daß** einzelne oder mehrere der flächenförmigen Elemente im Bereich ihrer Stoßkanten (12,14,15,27,28,29) durch Schmelzschweißen miteinander verbunden werden.

13. Verwendung nach Anspruch 10 oder 11, **dadurch gekennzeichnet, daß** einzelne oder mehrere der flächenförmigen Elemente im Bereich ihrer Stoßkanten (12,14,15,27,28,29) durch Kleben miteinander verbunden werden.

14. Verwendung nach einem der Ansprüche 10 bis 13, **dadurch gekennzeichnet, daß** im Bereich der Stoßkanten (12,15,28,29) aneinander grenzender flächenförmiger Elemente Abdeckstreifen (21,31,32), insbesondere auf der Seite des Auflageelementes (5,25) vorgesehen werden, die mit dem Auflageelement (5,25) durch Schweißen oder Kleben verbunden werden.

15. Verwendung nach einem der Ansprüche 10 bis 14, **dadurch gekennzeichnet, daß** der jeweilige Abdeckstreifen (21,31,32) zumindest mit dem gleichen Korrosionsverhalten, wie insbesondere das Auflageelement (5,25) versehen wird.

16. Verwendung nach einem der Ansprüche 10 bis 15, **dadurch gekennzeichnet, daß** die Verbindungsschicht mit einer Klebefugendicke zwischen 0,5 und 5,0 mm ausgeführt wird.

## Claims

1. Flat, cold deformable composite material, in particular for use as lining in the environmental and chemical process technique, comprising at least one metallic supporting element (4, 23) as well as at least one metallic coating element (5, 25), wherein the supporting element (4, 23) respectively the coating element (5, 25) is provided with a connecting layer (6, 26), which has viscoplastic features in the cross-linked condition, **characterized in that** the supporting element (4, 23) is made of a carbon steel and the coating element (5, 25) is formed of a corrosion resistant alloy.

2. Composite material according to claim 1, **characterized in that** the supporting element (4, 23) is a boiler plate made of carbon steel.

3. Composite material according to claim 1 or 2, **characterized in that** the coating element (5, 25) consists of a high corrosion resistant nickel-chromium-molybdenum alloy.

4. Composite material according to one of the claims 1 through 3, **characterized in that** the connecting layer (6, 26) is formed by a polyurethane adhesive, which is cross-linkable to form elastomers, or a polyurethane jointing compound, which is cross-linkable to form elastomers.

5. Composite material according to one of the claims 1 through 4, **characterized in that** one or more marginal regions (10, 11, 16, 19) of the respective surface (7) are provided without connecting layer.

6. Method for production of a flat, cold deformable composite material, in particular for use as lining in the environmental and chemical process technique, by providing a metallic supporting element (4, 23) respectively a metallic coating element (5, 25) with a connecting layer (6, 26) in a mechanical way or by sprinkling respectively spraying onto the corresponding surface, the connecting layer having viscoplastic properties in the cross-linked condition, **characterized in that** the connecting layer (6, 26) is applied to the surface (7) of the supporting element (4, 23) consisting of a carbon steel or to the surface of the coating element (5, 25) consisting of a corrosion resistant alloy.

7. Method according to claim 6, **characterized in that** the connecting layer (6, 26) is essentially applied to the whole area of the respective surface (7) of the supporting element (4, 23) or the coating element (5, 25).

8. Method according to claim 6 or 7, **characterized in that** a polyurethane adhesive is used as connecting layer (6, 26).

9. Method according to one of the claims 6 through 8, **characterized in that** a polyurethane jointing compound is used as connecting layer (6, 26).

10. Use of the composite material according to one of the claims 1 through 9 for old and new plants in the environmental and chemical process technique, in particular as lining for channels and chimneys of flue gas desulfurizing plants, in which at least parts of the lining form inner and/or outer wall portions of the plant.

11. Use of the composite material according to one of the claims 1 through 9 for the container construction in old and new plants of the chemical industry, in particular as lining for containers, wherein at least parts of the inner lining form inner and/or outer wall portions of these containers.

12. Use according to claim 10 or 11, **characterized in that** single or several ones of the flat elements are connected to each other in the region of their borderings (12, 14, 15, 27, 28, 29) by fusion welding.

13. Use according to claim 10 or 11, **characterized in that** single or several ones of the flat elements are connected to each other in the region of their borderings (12, 14, 15, 27, 28, 29) by gluing.

14. Use according to one of the claims 10 through 13, **characterized in that** in the region of the borderings (12, 15, 28, 29) of mutually adjacent flat elements, cover strips (21, 31, 32) are provided, in particular on the side of the coating element (5, 25), which cover strips are connected to the coating element (5, *25)* by welding or gluing.

15. Use according to one of the claims 10 through 14, **characterized in that** the respective cover strip (21, 31, 32) is provided with at least the same corrosion stability as in particular the coating element (5, 25).

16. Use according to one of the claims 10 through 15, **characterized in that** the connecting layer is formed with an adhesive joint thickness comprised between 0.5 and 5.0 mm.

## Revendications

1. Matériau composite plat et déformable à froid, en particulier pour l'emploi en tant que revêtement dans la technique de l'environnement et de procédé chimique, comprenant au moins un élément de support (4, 23) métallique ainsi qu'au moins un élément de revêtement (5, 25) métallique, l'élément de support (4, 23) respectivement l'élément de revêtement (5, 25) étant muni d'une couche de liaison (6, 26), qui a des propriétés viscoplastiques en état réticulé, **caractérisé en ce que** l'élément de support (4, 23) est composé d'un acier au carbone et l'élément de revêtement (5, 25) est composé d'un alliage résistant à la corrosion.

2. Matériau composite selon la revendication 1, **caractérisé en ce que** l'élément de support (4, 23) est une tôle chaudière en acier au carbone.

3. Matériau composite selon la revendication 1 ou 2, **caractérisé en ce que** l'élément de revêtement (5, 25) est composé d'un alliage nickel-chrome-molydène hautement résistant à la corrosion.

4. Matériau composite selon l'une des revendications 1 à 3, **caractérisé en ce que** la couche de liaison (6, 26) est composée d'une colle polyuréthanique réticulable pour former des élastomères ou d'un matériau d'étanchéité polyuréthanique réticulable pour former des élastomères.

5. Matériau composite selon l'une des revendications 1 à 4, **caractérisé en ce qu'**une ou plusieurs zones marginales (10, 11, 16, 19) de la surface respective (7) sont prévues sans couche de liaison.

6. Procédé de fabrication d'un matériau composite plat et déformable à froid, en particulier pour l'emploi en tant que revêtement dans la technique de l'environnement et de procédé chimique, en appliquant de manière mécanique ou par jaillissement respectivement pulvérisation une couche de liaison (6, 26) sur la surface correspondante d'un élément de support (4, 23) métallique ou d'un élément de revêtement (5, 25) métallique, la couche de liaison ayant des propriétés viscoplastiques en état réticulé, **caractérisé en ce qu** 'on applique la couche de liaison (6, 26) sur la surface (7) de l'élément de support (4, 23) composé d'un acier au carbone ou sur la surface de l'éléme de revêtement (5, 25) composé d'un alliage résistant à la corrosion.

7. Procédé selon la revendication 6, **caractérisé en ce qu'**on applique la couche de liaison (6, 26) essentiellement sur la zone entière de la surface respective (7) de l'élément de support (4, 23) ou de l'élément de revêtement (5, 25).

8. Procédé selon la revendication 6 ou 7, **caractérisé en ce qu'**on utilise une colle polyuréthanique en tant que couche de liaison (6, 26).

9. Procédé selon l'une des revendications 6 à 8, **caractérisé en ce qu'**on utilise un matériau d'étanchéité polyuréthanique en tant que couche de liaison (6, 26).

10. Utilisation du matériau composite selon l'une des revendications 1 à 9 pour des installations existantes et nouvelles de la technique de l'environnement et de l'industrie de procédé chimique, en particulier en tant que revêtement des canaux et des cheminées des installations de désulfuration des gaz de fumée, dont au moins des parties du revêtement forment des zones de paroi intérieur et/ou extérieur de l'installation.

11. Utilisation du matériau composite selon l'une des revendications 1 à 9 pour la construction de réservoirs dans des installations existantes et nouvelles de l'industrie chimique, en particulier en tant que revêtement pour des réservoirs, au moins des parties du revêtement intérieur formant des zones de paroi intérieur et/ou extérieur de ces réservoirs.

12. Utilisation selon la revendication 10 ou 11, **caractérisée en ce que** des éléments isolés ou plusieurs des éléments plats sont reliés l'un à l'autre dans la région de leurs bords (12, 14, 15, 27, 28, 29) par soudage par fusion.

13. Utilisation selon la revendication 10 ou 11, **caractérisée en ce que** des éléments isolés ou plusieurs des éléments plats sont reliés l'un à l'autre dans la région de leurs bords (12, 14, 15, 27, 28, 29) par collage.

14. Utilisation selon l'une des revendications 10 à 13, **caractérisée en ce qu'**on prévoit dans la région des bords (12, 15, 28, 29) des éléments plats adjacents l'un à l'autre, en particulier du côté de l'élément de revêtement (5, 25), des bandes de recouvrements (21, 31, 32), qui sont reliées à l'élément de revêtement (5, 25) par soudage ou collage.

15. Utilisation selon l'une des revendications 10 à 14, **caractérisée en ce que** la bande de recouvrement respective (21, 31, 32) est munie d'au moins la même tenue à la corrosion qu'en particulier l'élément de revêtement (5, 25).

16. Utilisation selon l'une des revendications 10 à 15, **caractérisée en ce que** la couche de liaison est formée avec une épaisseur de jointure de collage comprise entre 0,5 et 5,0 mm.
